# EUROPÄISCHE PATENTSCHRIFT

(11) **EP 2 625 492 B1**
(45) Veröffentlichungstag und Bekanntmachung des Hinweises auf die Patenterteilung: **18.02.2015**
(21) Anmeldenummer: 11776347.4
(22) Anmeldetag: 04.10.2011
(51) Int. Cl.: G01F 1/84

(54) **CORIOLIS-MASSEDURCHFLUSSMESSGERÄT**
CORIOLIS MASS FLOW METER
DÉBITMÈTRE MASSIQUE À EFFET CORIOLIS

(30) Priorität: 04.10.2010 DE 102010047241
(43) Veröffentlichungstag der Anmeldung: 14.08.2013
(73) Patentinhaber: Krohne AG, 4019 Basel (CH)
(72) Erfinder: HUSSAIN, Yousif, Northampton NN3 3DA (GB); WANG, Tao, Canterbury Kent CT2 9DG (GB)
(74) Vertreter: Gesthuysen Patent- und Rechtsanwälte
(86) Internationale Anmeldenummer: PCT/EP2011/004934
(87) Internationale Veröffentlichungsnummer: WO 2012/045434

(56) Entgegenhaltungen:
- EP-A1- 2 159 552
- WO-A2-96/08697
- DE-A1-102009 001 472

## Beschreibung

Die Erfindung betrifft ein Coriolis-Massedurchflussmessgerät mit mindestens vier parallel verlaufenden Messrohren, wobei die Messrohre jeweils paarweise mit mindestens einer Haltevorrichtung zu einer Schwingungseinheit zusammengefasst sind, wobei die Messrohre in Ausnehmung in den Haltevorrichtungen eingebracht sind, wobei an den Haltevorrichtungen jeweils mindestens ein Teil einer Sensor- oder Aktuatoreinrichtung befestigt ist, wobei die Messrohrmittelachsen eines Messrohrpaares eine gemeinsame Ebene E aufspannen, und wobei die Haltevorrichtungen mindestens zwei Befestigungsansätze aufweisen.

Massedurchflussmessgeräte, die nach dem Coriolis-Prinzip arbeiten, weisen im Allgemeinen wenigstens eine Aktuatoreinrichtung auf, mit der die Messrohre bzw. die Schwingungseinheiten zu Schwingungen angeregt werden, sowie üblicherweise zwei Sensoreinrichtungen, mit denen die erzielte Schwingung oder die erzielten Schwingungen der Messrohre erfasst wird bzw. erfasst werden. Die Sensoreinrichtungen sind üblicherweise ein- und auslaufseitig an den Schwingungseinheiten montiert. Ohne Durchfluss sind beide Signale im Wesentlichen phasengleich. Bei Massendurchfluss ergibt sich durch die im Zu- und Ablauf unterschiedliche Corioliskraft eine Phasenverschiebung der beiden Signale, die proportional dem Massedurchfluss ist, so dass dieser über die Phasenverschiebung bestimmbar ist.

Die Aktuatoreinrichtung und die Sensoreinrichtung sind meist derart aufgebaut, dass sie beispielsweise einen Permanentmagneten sowie eine Magnetspule aufweisen, um auf elektrischem Wege Schwingungen auf die Messrohre zu übertragen - Kraftwirkung - bzw. Schwingungen der Messrohre zu erfassen - Induktionswirkung. Der Anmelderin sind aus Praxis Coriolis-Massedurchflussmessgeräte mit vier Messrohren bekannt, bei denen jeweils zwei Messrohre mit mindestens einer Haltevorrichtung zu einer Schwingungseinheit zusammengefasst sind, die von einer Aktuatoreinrichtung zu Schwingungen angeregt werden.

WO 69/08697 A2 offenbart ein Coriolis-Massedurchflussmessgerät mit vier Messrohren, wobei jeweils zwei Messrohre mit einer Haltevorrichtung zu einem Messrohrpaar zusammengefasst sind. Die Sensor- und Aktuatorvorrichtungen sind oberhalb und unterhalb des Messrohrpaares an den Haltevorrichtungen befestigt.

EP 2 159 552 A1 offenbart ein Coriolis-Massedurchflussmessgerät mit vier parallel zueinander verlaufenden, geraden Messrohren. Die Messrohre sind mit Haltevorrichtungen paarweise zusammengefasst. Einlaufseitig und Auslaufseitig sind Schwingungsknotenplatten vorgesehen, die alle vier Messrohre zusammenfassen.

DE 10 2009 001 472 A1 offenbart einen Meßaufnehmer vom Vibrationstyp mit vier geraden Messrohren. Die Messrohre sind durch Haltevorrichtungen zu Messrohrpaaren zusammengefasst. Zudem sind ringförmige Versteifungselemente an den Messrohren vorgesehen, die in regelmäßigen Abständen zwischen den Haltevorrichtungen angeordnet sind.

Die aus dem Stand der Technik bekannten Coriolis-Massedurchflussmessgeräte weisen jedoch den Nachteil auf, dass die Messrohre einer Schwingungseinheit nicht nur relativ zu den anderen Schwingungseinheiten schwingen, sondern die Messrohre einer Schwingungseinheit auch relativ zueinander schwingen können, wodurch die Messergebnisse des Coriolis-Massedurchflussmessgeräts negativ beeinflusst werden.

Ausgehend von dem vorgenannten Stand der Technik liegt die Erfindung zugrunde, ein Coriolis-Massedurchflussmessgerät anzugeben, das eine gesteigerte Messgenauigkeit aufweist.

Die erfindungsgemäße Aufgabe ist bei einem gattungemäßen Coriolis-Massedurchflussmessgerät dadurch gelöst, dass sich die Befestigungsansätze in der Ebene E erstrecken, und dass die Haltevorrichtungen mit den Befestigungsansätzen bezüglich ihrer Projektionsansicht in Richtung der Messrohrmittelachsen spiegelsymmetrisch zur Ebene E ausgestaltet sind.

Das Coriolis-Massedurchflussmessgerät besteht folglich bevorzugt aus vier parallel zueinander verlaufenden Messrohren, von denen jeweils zwei mit mindestens einer Halteeinrichtung zu einer Schwingungseinheit zusammengefasst sind. Vorzugsweise sind an den jeweils zwei Messrohren einer Schwingungseinheit insgesamt drei Haltevorrichtungen befestigt, wobei jeweils eine Haltevorrichtung Teile von Aktuatoreinrichtungen und die beiden weiteren Haltevorrichtungen Teile von Sensoranordnungen tragen. Die Haltevorrichtungen weisen Ausnehmungen für die Messrohre auf, so dass die Haltevorrichtungen auf die zwei zusammenzufassenden Messrohre aufgeschoben werden können und mit den Messrohren, beispielsweise durch eine Schweißverbindung, verbunden werden. Die Haltevorrichtungen sind derart stabil ausgestaltet, dass Schwingungen der beiden zu einer Schwingungseinheit zusammengefassten Messrohre relativ zueinander durch die Haltevorrichtungen verhindert werden.

Die beiden in einer Haltevorrichtung gehaltenen Messrohre spannen mit ihren parallel zueinander verlaufenden Messrohrmittelachsen eine gemeinsame Ebene E auf, in der somit beide Messrohrmittelachsen verlaufen. An den Haltevorrichtungen sind jeweils gegenüberliegend - beidseitig der Haltevorrichtung - zwei Befestigungsansätze angeordnet, die sich in der Ebene E erstrecken. Wenn also beispielsweise die Messrohre in den Haltevorrichtungen übereinander angeordnet sind, ist jeweils ein Befestigungsansatz oberhalb der Messrohre und ein Befestigungsansatz unterhalb der Messrohre angeordnet.

Dass sich die Befestigungsansätze in der Ebene E erstrecken bedeutet dabei lediglich, dass zumindest ein Teil jeweils eines Befestigungsansatzes von der Ebene E geschnitten wird bzw. innerhalb der Ebene E liegt. Die Befestigungsansätze sind also derart angeordnet, dass die Messrohre jeweils zwischen den beiden Befestigungsansätzen positioniert sind und sich die Befestigungsansätze symmetrisch zu den Messrohren erstrecken.

An den Befestigungsansätzen sind jeweils Teile einer Sensor- oder Aktuatoreinrichtung befestigbar. "Teil einer Sensor- oder Aktuatoreinrichtung" bedeutet dabei, dass jeweils nur ein erster Teil einer Sensor- oder Aktuatoreinrichtung an einem Befestigungsansatz befestigt ist. Eine vollständige Sensor- oder Aktuatoreinrichtung für den Betrieb eines Coriolis-Massedurchflussmessgeräts ergibt sich erst durch das Zusammenwirken von zwei gegenüberliegend angeordneten Teilen einer Sensor- oder Aktuatoreinrichtung, beispielsweise eines Permanentmagneten und einer Spule, die im Betrieb mit der Funktion einer Sensoreinrichtung oder einer Aktuatoreinrichtung zusammenwirken. Das bedeutet folglich, wenn an einer Schwingungseinheit aus zwei Messrohren eine Haltevorrichtung befestigt ist, die jeweils oberhalb und unterhalb der Messrohre einen Teil einer Sensor- oder Aktuatoreinrichtung trägt, dass entsprechend an der zweiten Schwingungseinheit, die aus dem zweiten Messrohrpaar gebildet wird, gegenüberliegend zu der ersten Haltevorrichtung eine zweite Haltevorrichtung befestigt ist, die jeweils die entsprechenden zweiten Teile einer Sensor- oder Aktuatoreinrichtung trägt. Die ersten und zweiten Teile einer Sensor - oder Aktuatoreinrichtung an der ersten und der zweiten Haltevorrichtung können dann im Betrieb des Coriolis-Massedurchflussmessgerät miteinander wechselwirken, um so die Messrohre in Schwingungen zu versetzen bzw. die Schwingungen der Messrohre zu erfassen.

Bezüglich ihrer Bauelemente sind eine Sensoreinrichtung und eine Aktuatoreinrichtung üblicherweise gleich ausgestaltet, wobei bei einer Aktuatoreinrichtung die Bauelemente zum Anregen der Messrohre zu einer Schwingung verwendet werden, während bei einer Sensoreinrichtung identische Bauelemente zum Erfassen der Schwingung verwendet werden. Das bedeutet, dass eine Aktuatoreinrichtung grundsätzlich auch als Sensoreinrichtung bzw. eine Sensoreinrichtung grundsätzlich auch als Aktuatoreinrichtung verwendet werden kann. Die Verwendung der jeweiligen Bauelemente kann beispielsweise auch im Betrieb des Messgeräts auch im Betrieb des Messgeräts umgeschaltet werden, so dass die Bauelemente zunächst zum Anregen der Schwingung und nachfolgend zum Erfassen der Schwingung verwendet werden.

"Sensor - oder Aktuatoreinrichtung" ist nicht ausschließend zu verstehen und bedeutet somit nicht nur, dass an einer Haltevorrichtung nur Teile einer Sensoreinrichtung oder nur Teile einer Aktuatoreinrichtung befestigt werden sollen, sondern auch, dass eine Haltevorrichtung an einem Befestigungsansatz eine Sensoreinrichtung und an dem anderen Befestigungsansatz eine Aktuatoreinrichtung tragen kann. Vorzugsweise sind an einer Haltevorrichtung jeweils zwei erste Teile einer Sensor- oder Aktuatoreinrichtung befestigt, während die gegenüberliegend angeordnete Haltevorrichtung die entsprechenden zweiten Teile trägt. Zur Aufnahme der Teile einer Sensor- oder Aktuatoreinrichtung weisen die Befestigungsansätze Aufnahmebereiche auf.

Die Haltevorrichtungen mit den Befestigungsansätzen weisen den besonderen Vorteil auf, dass sie bezüglich ihrer Projektionsansicht in Richtung der Messrohrachsen spiegelsymmetrisch zur Ebene E ausgestaltet sind. Das bedeutet grundsätzlich, dass die Grundform einer Haltevorrichtung mit den Befestigungsansätzen in Richtung der Messrohrmittelachsen spiegelsymmetrisch zur Ebene E ist. Die Haltevorrichtungen mit den Befestigungsansätzen erstrecken sich somit bezüglich ihrer Projektionsansicht spiegelsymmetrisch rechts und links von der Ebene E. Die Haltevorrichtungen erhalten dadurch eine vorteilhafte Stabilität und hervorragende Schwingungseigenschaften, wodurch Störschwingungen zwischen den zu einer Schwingungseinheit zusammengefassten Messrohren gedämpft oder unterbunden werden.

Bevorzugt ist der Körper einer Haltevorrichtung in seiner gesamten Erstreckung in Richtung der Messrohrmittelachsen spiegelsymmetrisch zur Ebene E, allerdings kann es insbesondere an den Befestigungsansätzen zu geringfügigen Abweichungen bezüglich der Symmetrie kommen, die durch die Aufnahmebereiche zur Befestigung der Sensor- oder Aktuatoreinheiten bedingt sind, die Schwingungseigenschaften der Haltevorrichtungen jedoch nicht beeinflussen.

Um die Stabilität der Haltevorrichtung weiter zu steigern, ist gemäß einer ersten Weiterbildung des Coriolis-Massedurchflussmessgeräts vorgesehen, dass die Haltevorrichtung mit den Befestigungsansätzen einstückig ausgebildet sind, insbesondere aus einem einzigen Rohteil gefertigt sind. Die Haltevorrichtungen zusammen mit den Befestigungsansätzen sind vorzugsweise aus einem einzigen Rohteil herausgearbeitet, z. B. gefräst, was gegenüber mehrteiligen oder geschweißten Haltevorrichtungen den Vorteil aufweist, dass eine genauere Maßhaltigkeit realisiert werden kann und insbesondere keine Materialspannungen durch ungleichmäßigen Wärmeeintrag entstehen können. Alternativ zu der Fertigung aus einem einzigen Rohteil können die Haltevorrichtungen mit den Befestigungsansätzen auch geschmiedet werden, so dass die Haltevorrichtungen mit den Befestigungsansätzen gemeinsam durch einen Urformvorgang hergestellt werden. Derart hergestellte Haltevorrichtungen zur Verbindung zweier Messrohre zu einer Schwingungseinheit weisen eine erhöhte Stabilität auf und verhindern zuverlässig, dass Störschwingungen der verbundenen Messrohre relativ zueinander auftreten können.

Als besonders vorteilhaft hat sich ferner herausgestellt, wenn die Erstreckung der Haltevorrichtungen in Richtung der Messrohrmittelachsen größer ist als die doppelte Messrohrwandstärke und kleiner ist als der Messrohrdurchmesser. Durch diese definierte Dicke der Haltevorrichtungen in Richtung der Erstreckung der Messrohrmittelachsen wird u. a. die Größe der Kontaktfläche zwischen Messrohr und Haltevorrichtung festgelegt, so dass die Messrohre in ausreichendem Maße durch die Haltevorrichtungen abgestützt sind. Das angegebene Verhältnis der Erstreckung der Haltevorrichtungen in Richtung der Messrohrmittelachsen zur Wandstärke des Messrohrs und zum Messrohrdurchmesser bestimmt für die Haltevorrichtungen ein definiertes Flächenträgheitsmoment, so dass insbesondere Schwingungen der beiden zu einer Schwingungseinheit verbundenen Messrohre gedämpft und verhindert werden.

Als ganz besonders vorteilhaftes Verhältnis zwischen der Dicke einer Haltevorrichtung und dem Messrohrdurchmesser hat sich herausgestellt, wenn die Erstreckung der Haltevorrichtungen in Richtung der Messrohrmittelachsen etwa der Hälfte des Messrohrdurchmessers entspricht. Eine Materialdicke der Haltevorrichtungen, die etwa dem Radius der Messrohre entspricht, realisiert ein Optimum der Dämpfungseigenschaften, insbesondere wenn der Durchmesser der Messrohre zwischen 30 mm bis 45 mm liegt und die Messrohrwandstärke zwischen 0,5 mm und 1,5 mm beträgt.

Zum funktionsgemäßen Gebrauch eines Coriolis-Massedurchflussmessgeräts ist es erforderlich, dass an den Schwingungseinheiten jeweils exakt gegenüberliegend jeweils eine Haltevorrichtung an den Schwingungseinheiten befestigt sind, so dass gemäß einer bevorzugten Weiterbildung vorgesehen ist, dass sich die seitlichen Flanken der Haltevorrichtungen zwischen den Messrohrmittelachsen parallel zur Ebene E erstrecken, insbesondere die seitlichen Flanken parallel zueinander verlaufen. Die Gesamtbreite der Haltevorrichtungen ist dabei möglichst schmal, wobei die Mindestbreite durch den Messrohrdurchmesser und eine verbleibende Mindestwandstärke der Haltevorrichtungen festgelegt ist. Durch die parallel zueinander verlaufenden Flanken, die insbesondere zwischen den Messrohrmittelachsen parallel zur Ebene E verlaufen, werden Ausbauchungen der Haltevorrichtungen verhindert und sichergestellt, dass sich die gegenüberliegend angeordneten Haltevorrichtungen an den jeweiligen Schwingungseinheiten im Betriebszustand des Coriolis-Massedurchflussmessgeräts nicht gegenseitig beeinflussen und insbesondere nicht berühren.

Als vorteilhaft hat sich gemäß einer weiteren Ausgestaltung des Coriolis-Massedurchflussmessgeräts herausgestellt, wenn die Befestigungsansätze der Haltevorrichtung in Richtung der Erstreckung der Messrohrmittelachsen eine rechteckige Projektionsansicht aufweisen. Die im Wesentlichen rechteckige Form der Befestigungsansätze steigert die Stabilität der Haltevorrichtung, indem die Haltevorrichtung beidseitig jeweils um einen Befestigungsansatz erweitert ist, der die Haltevorrichtungen gerade in dem Bereich verstärkt, in dem ohne die Befestigungsansätze eine geringe Materialstärke vorliegen würde. Durch die rechteckigen Befestigungsansätze wird ferner die Torsionssteifigkeit der Haltevorrichtungen gesteigert.

Um bei gleichbleibender Stabilität das Gewicht der Haltevorrichtungen zu reduzieren, ist gemäß einer Weiterbildung vorgesehen, dass die Haltevorrichtungen zwischen den Ausnehmungen für die Messrohre jeweils rechts und links der Ebene E eine Bohrung aufweisen, wobei sich die Bohrungen parallel zu den Ausnehmungen erstrecken. Durch die Bohrungen wird die Gesamtmasse der Haltevorrichtung reduziert, wobei jedoch gleichzeitig die vorteilhafte Stabilität erhalten bleibt. Die Bohrungen sind vorzugsweise in den im Wesentlichen dreieckigen Zwischenbereichen zwischen den beiden kreisrunden Ausnehmungen für die Messrohre in der Haltevorrichtung vorgesehen. Der Durchmesser der Bohrungen ist dabei so gewählt, dass die Bohrungen jeweils von einer Mindestwandstärke umgeben sind, die der minimalen Wandstärke der Haltevorrichtungen im Bereich der Ausnehmungen entspricht. Anstelle der Bohrungen können auch Aussparungen beliebiger Geometrie vorgesehen sein, die durch ein geeignetes Verfahren spanend oder nichtspanend eingebracht werden. Als Verfahren eignen sich beispielsweise Funkenerosion oder Laserschneiden. Für den Fall, dass die Haltevorrichtungen mit den Befestigungsansätzen durch ein Urformverfahren hergestellt werden, können die Aussparungen bereits bei der Herstellung vorgesehen sein.

Zur Gewährleistung einer hinreichenden Stabilität der Haltevorrichtung ist gemäß einer Ausgestaltung vorgesehen, dass die minimale Wandstärke der Haltevorrichtungen im Bereich der Ausnehmungen für die Messrohre, also radial zur Messrohrmittelachse, mindestens etwa 10 % des Messrohrdurchmessers entspricht. Die minimale Breite der Haltevorrichtungen ergibt sich somit etwa zu 120 % des Messrohrdurchmessers. Die minimale Wandstärke ist notwendig, um trotz der für die Durchführung der Messrohre notwendigen Ausnehmungen eine ausreichende Stabilität der Haltevorrichtung zu gewährleisten und eine Dämpfung von Störschwingungen sicherzustellen.

Eine besonders vorteilhafte Steifigkeit der Haltevorrichtungen entsteht, wenn gemäß einer besonders bevorzugten Weiterbildung die Haltevorrichtungen mit den Befestigungsansätzen in ihrer Grundform auch bezüglich einer Ebene B spiegelsymmetrisch ausgestaltet sind, wobei sich die Ebene B orthogonal zur Ebene E erstreckt und in der Mitte zwischen den Messrohrmittelachsen eines Messrohrpaares liegt. Da die Messrohre symmetrisch in die Haltevorrichtung eingebracht sind, liegt die Spiegelebene der Haltevorrichtung folglich exakt in der Mitte zwischen den Ausnehmungen für die Durchführung der Messrohre. Die Haltevorrichtungen erstrecken sich somit identisch zu beiden Seiten der Ebene B, wobei ohnehin stets vorgesehen ist, dass beidseitig der Ebene B jeweils ein Befestigungsansatz an der Haltevorrichtung vorgesehen ist. Gemäß dieser Ausgestaltung sind die Haltevorrichtungen im Wesentlichen vollständig symmetrisch, was sich vorteilhaft auf die Dämpfungseigenschaften und die Torsionssteifigkeit der Haltevorrichtungen auswirkt.

Eine nächste Weiterbildung sieht vor, dass die Haltevorrichtungen mit den Befestigungsansätzen aus einem rostfreien Stahl gefertigt sind. Durch die Verwendung von rostfreiem Stahl werden die Haltevorrichtungen unanfällig gegen Korrosionsbeschädigungen und mögliche Beschädigungen, die aus einer Langzeitschwingungsbelastung resultieren und bei herkömmlichen Stählen zu einer Materialermüdung führen. Außerdem sind die Haltevorrichtungen aus einem rostfreien Stahl unanfällig gegen Korrosion und den Angriff durch aggressive Medien.

Die Stabilität des Coriolis-Massedurchflussmessgeräts insgesamt wird gesteigert, wenn gemäß einer weiteren Ausgestaltung beidseitig in den Endbereichen der Messrohre jeweils zwei Knotenplatten vorgesehen sind, dass die Knotenplatten symmetrisch ausgestaltet sind und dass die Dicke der Knotenplatten der Erstreckung der Haltevorrichtungen in Richtung der Messrohrmittelachsen entspricht. Die Knotenplatten sind dazu in den Endbereichen beabstandet voneinander angeordnet, so dass der Messbereich des Coriolis-Massedurchflussmessgeräts zwischen den jeweils beidseitig vorgesehenen inneren Knotenplatten definiert wird. Durch die beiden Knotenplatten jeweils in den Endbereichen wird ein Auskoppeln der Schwingungen auf die das Coriolis-Massedurchflussmessgerät umgebenden Rohrleitungen zuverlässig verhindert und qualitativ hochwertige Messwerte sichergestellt. Die Dicke der Knotenplatten entspricht vorzugsweise der Dicke der Haltevorrichtungen und ist somit entsprechend den Vorgaben für die Haltevorrichtungen bemessen. Auch die Knotenplatten sind vorzugsweise aus einem einzigen Rohteil gefertigt, in dem beispielsweise aus einem Rohteil vier Ausnehmungen für die vier Messrohre ausgenommen sind, die Knotenplatte auf die vier Messrohre aufgeschoben worden ist und mit diesen verbunden worden ist. Auch die Knotenplatten sind vorzugsweise sowohl zur Ebene E als auch zur Ebene B vollständig symmetrisch.

Im Einzelnen gibt es nun eine Vielzahl von Möglichkeiten das erfindungsgemäße Coriolis-Massedurchflussmessgerät auszugestalten und weiterzubilden.

Dazu wird verwiesen sowohl auf die dem Patentanspruch 1 nachgeordneten Patentansprüche als auch auf die nachfolgende Beschreibung von bevorzugten Ausführungsbeispielen in Verbindung mit der Zeichnung. In der Zeichnung zeigen:
- Fig. 1: ein Ausführungsbeispiel einer Haltevorrichtung für ein Coriolis-Massedurchflussmessgerät in perspektivischer Ansicht,
- Fig. 2: das Ausführungsbeispiel einer Haltevorrichtung gemäß Fig. 1 in einer Frontansicht,
- Fig. 3: das Ausführungsbeispiel einer Haltevorrichtung gemäß Fig. 1 in einer Seitenansicht, und
- Fig. 4: das Ausführungsbeispiel gemäß Fig. 1 in einer Draufsicht.

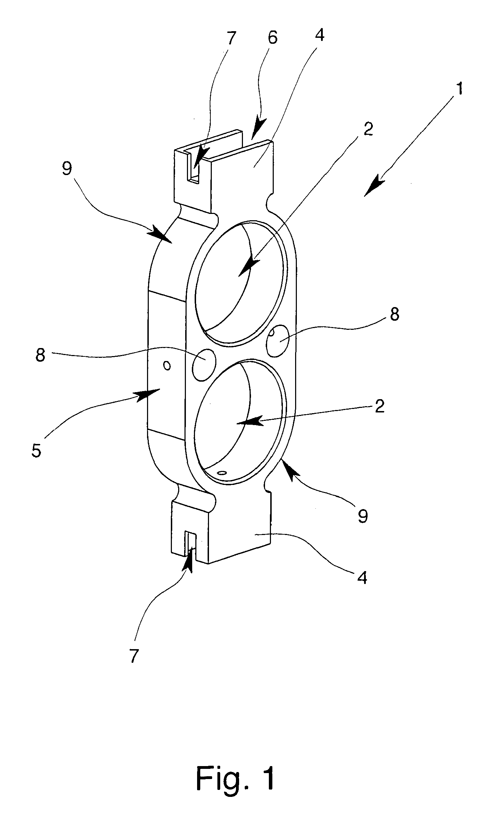

Fig. 1 zeigt eine Haltevorrichtung 1 für ein - nicht dargestelltes - Coriolis-Massedurchflussmessgerät mit vier parallel verlaufenden Messrohren. Die Haltevorrichtung 1 fasst im Montagezustand zwei Messrohre zu einer Schwingungseinheit zusammen, indem die Messrohre über die Haltevorrichtung 1 miteinander fest gekoppelt werden. Zur Befestigung an den Messrohren bzw. zum Aufschieben auf die Messrohre weist die Haltevorrichtung 1 Ausnehmungen 2 auf, in die die Messrohre eingebracht werden.

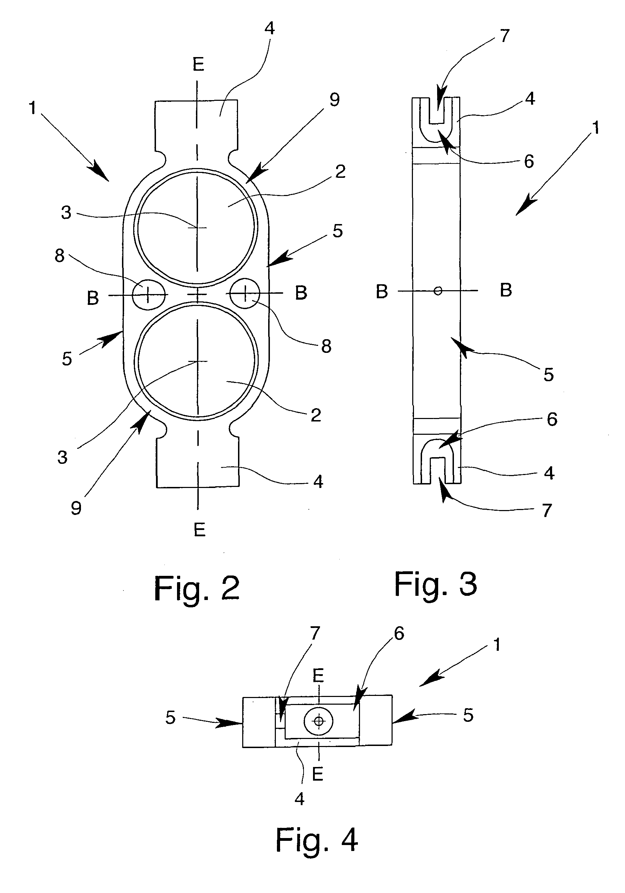

Fig. 2 zeigt die Haltevorrichtung 1 gemäß Fig. 1 in einer Frontansicht. Die Messrohrmittelachsen 3 der nicht dargestellten Messrohre liegen in einer gemeinsamen Ebene E, die sich gemäß Fig. 2 senkrecht durch die Haltevorrichtung 1 erstreckt. Die in Fig. 2 dargestellte Projektionsansicht der Haltevorrichtung 1 in Richtung der Erstreckung der Messrohrmittelachsen 3 ist symmetrisch zur Ebene E, wodurch sich für die Haltevorrichtung 1 vorteilhafte Schwingungseigenschaften ergeben. Die Haltevorrichtung 1 weist zwei Befestigungsansätze 4 auf, die bei diesem Ausführungsbeispiel einstückig mit der Haltevorrichtung 1 ausgestaltet sind, indem dem Haltevorrichtung 1 mit den Befestigungsansätzen 4 aus einem Rohteil gefertigt worden ist. Die seitlichen Flanken 5 der Haltevorrichtung 1 erstrecken sich sowohl parallel zueinander als auch parallel zur Ebene E, so dass sich eine bevorzugte schmale Bauform der Haltevorrichtung 1 ergibt.

Fig. 3 zeigt die Haltevorrichtung 1 gemäß Fig. 1 in einer Seitenansicht. In dieser Seitenansicht lässt sich die Erstreckung der Haltevorrichtung 1 in Richtung der Messrohrmittelachsen 3 sehr deutlich erkennen, die hier etwa der Hälfte des Messrohrdurchmessers entspricht. An den Befestigungsansätzen 4 sind eine erste Aussparung 6 und eine zweite Aussparung 7 vorgesehen, die der Befestigung von - nicht dargestellten - Teilen von Sensor- oder Aktuatoreinrichtungen dienen. Die Teile der Sensor- oder Aktuatoreinrichtungen werden an der ersten Aussparung 6 befestigt, wobei die Aussparung 7 zur Heranführung eines Befestigungswerkzeuges an die Aussparung 6 dient. Die Aussparungen 6, 7 stellen die einzigen Abweichungen der Form der Haltevorrichtung 1 von einer vollständigen Symmetrie dar, haben allerdings keinen Einfluss auf die Schwingungseigenschaften; die Symmetrie der Projektionsansicht bleibt trotz der Aussparungen erhalten - siehe Fig. 2.

Fig. 4 zeigt eine Draufsicht der Haltevorrichtung 1 gemäß Fig. 1 in der die Gesamtbreite der Haltevorrichtung 1 zu erkennen ist, die im vorliegenden Fall etwa 120 % des Messrohrdurchmessers entspricht. Im oberen Bereich sind die Aussparungen 6, 7 an dem Befestigungsansatz 4 zur Befestigung der - nicht dargestellten - Teile einer Sensor- oder Aktuatoreinrichtung angeordnet. Die Flanken 5 erstrecken sich parallel zueinander und auch jeweils parallel zur Ebene E.

Zur Gewichtseinsparung sind gemäß Fig. 2 in den zwischen den Aussparungen 2 für die Messrohre entstehenden dreieckigen Bereichen Bohrungen 8 vorgesehen, die sich parallel zu den Ausnehmungen 2 erstrecken, wobei gleichzeitig die ausreichende Stabilität der massiven Haltevorrichtung 1 erhalten bleibt. Die minimale Wandstärke der Haltevorrichtung 1 im Bereich 9 der Ausnehmungen 2 beträgt etwa 10 % des Messrohrdurchmessers, hier also etwa 10 % des Durchmessers der Ausnehmungen 2. Auch die Bohrungen 8 sind rundherum von einer Mindestwandstärke umgeben, die etwa der vorgenannten Mindestwandstärke im Bereich 9 der Ausnehmungen 2 entspricht. Die Befestigungsansätze 4 weisen in Richtung der Erstreckung der Messrohrmittelachsen 3 eine rechteckige Grundform auf, durch die die Haltevorrichtungen 1 jeweils im oberen und unteren Bereich gemäß Fig. 2 versteift werden.

Die in den Fig. 1 bis 4 gezeigte Haltevorrichtung 1 ist nicht nur - bezüglich ihrer Projektionsansicht - symmetrisch zur Ebene E, sondern auch vollständig zur Ebene B, die sich parallel zu den Messrohrmittelachsen 3 erstreckt und in der Mitte zwischen diesen liegt - siehe Fig. 2. Die Ebene B liegt bei diesem Ausführungsbeispiel exakt auf den Mittelachsen der Bohrungen 8. Der Messrohrdurchmesser beträgt bei diesem Ausführungsbeispiel etwa 38 mm, wobei die Wandstärke der - nicht dargestellten - Messrohre etwa 0,7 mm beträgt

Wie in Fig. 1 zu erkennen ist die Haltevorrichtung 1 somit - mit Ausnahme der Aussparungen 6, 7 - vollständig symmetrisch sowohl zur Ebene E als auch zur Ebene B, wodurch sich bevorzugte Dämpfungseigenschaften ergeben, die eine Relativschwingung der in der Haltevorrichtung 1 eingebrachten Messrohre relativ zueinander verhindert und eine Torsion der Haltevorrichtung 1 bezüglich ihrer - senkrecht durch die Messrohrmittelachsen 3 verlaufenden - Längsachse verhindern.

## Patentansprüche

1. Coriolis-Massedurchflussmessgerät mit mindestens vier parallel verlaufenden Messrohren, wobei die Messrohre jeweils paarweise mit mindestens einer Haltevorrichtung (1) zu einer Schwingungseinheit zusammengefasst sind, wobei die Messrohre in Ausnehmungen (2) in den Haltevorrichtungen (1) eingebracht sind, wobei an den Haltevorrichtungen (1) jeweils mindestens ein Teil einer Sensor- oder Aktuatoreinrichtung befestigt ist, wobei die Messrohrmittelachsen (3) eines Messrohrpaares eine gemeinsame Ebene (E) aufspannen, und wobei die Haltevorrichtungen (1) mindestens zwei Befestigungsansätze (4) aufweisen,
**dadurch gekennzeichnet,**
**dass** sich die Befestigungsansätze (4) in der Ebene (E) erstrecken, und dass die Haltevorrichtungen (1) mit den Befestigungsansätzen (4) bezüglich ihrer Projektionsansicht in Richtung der Messrohrmittelachsen (3) spiegelsymmetrisch zur Ebene (E) ausgestaltet sind.

2. Coriolis-Massedurchflussmessgerät nach Anspruch 1, **dadurch gekennzeichnet, dass** die Haltevorrichtungen (1) mit den Befestigungsansätzen (4) einstückig ausgebildet sind, insbesondere aus einem einzigen Rohteil gefertigt sind.

3. Coriolis-Massedurchflussmessgerät nach Anspruch 1 oder 2, **dadurch gekennzeichnet, dass** die Erstreckung der Haltevorrichtungen (1) in Richtung der Messrohrmittelachsen (3) größer ist als die doppelte Messrohrwandstärke und kleiner ist als der Messrohrdurchmesser.

4. Coriolis-Massedurchflussmessgerät nach einem der Ansprüche 1 bis 3, **dadurch gekennzeichnet, dass** die Erstreckung der Haltevorrichtungen (1) in Richtung der Messrohrmittelachsen (3) etwa der Hälfte des Messrohrdurchmessers entspricht.

5. Coriolis-Massedurchflussmessgerät einem der Ansprüche 1 bis 4, **dadurch gekennzeichnet, dass** sich die seitlichen Flanken (5) der Haltevorrichtungen (1) zwischen den Messrohrmittelachsen (3) parallel zur Ebene (E) erstrecken, insbesondere die seitlichen Flanken (5) parallel zueinander verlaufen.

6. Coriolis-Massedurchflussmessgerät nach einem der Ansprüche 1 bis 5, **dadurch gekennzeichnet, dass** die Befestigungsansätze (4) der Haltevorrichtungen (1) in Richtung der Messrohrmittelachsen (3) eine rechteckige Projektionsansicht aufweisen.

7. Coriolis-Massedurchflussmessgerät nach einem der Ansprüche 1 bis 6, **dadurch gekennzeichnet, dass** die Haltevorrichtungen (1) zwischen den Ausnehmungen (2) für die Messrohre jeweils rechts und links der Ebene (E) eine Bohrung (8) aufweisen, wobei sich die Bohrungen (8) parallel zu den Ausnehmungen (2) erstrecken.

8. Coriolis-Massedurchflussmessgerät nach einem der Ansprüche 1 bis 7, dadurch gekennzeichet, dass die minimale Wandstärke der Haltevorrichtungen (1) im Bereich (9) der Ausnehmungen (2) für die Messrohre, also radial zur Messrohrmittelachse (3), etwa 10% des Messrohrdurchmessers entspricht.

9. Coriolis-Massedurchflussmessgerät nach einem der Ansprüche 1 bis 8, dadurch gekennzeichet dass die Haltevorrichtungen (1) mit den Befestigungsansätzen (4) in ihrer Grundform auch bezüglich einer Ebene (B) spiegelsymmetrisch ausgestaltet ist, wobei die Ebene (B) sich orthogonal zur Ebene (E) erstreckt und in der Mitte zwischen den Messrohrmittelachsen (3) eines Messrohrpaares liegt.

10. Coriolis-Massedurchflussmessgerät nach einem der Ansprüche 1 bis 9, **dadurch gekennzeichnet, dass** die Haltevorrichtungen (1) mit den Befestigungsansätzen (4) aus einem rostfreien Stahl gefertigt sind.

11. Coriolis-Massedurchflussmessgerät nach einem der Ansprüche 1 bis 10, **dadurch gekennzeichnet, dass** beidseitig in den Endbereichen der Messrohre jeweils zwei Knotenplatten vorgesehen sind, dass die Knotenplatten symmetrisch ausgestaltet sind, und dass die Dicke der Knotenplatten der Erstreckung der Haltevorrichtungen (1) in Richtung der Messrohrmittelachsen (3) entspricht.

## Claims

1. Coriolis mass flowmeter having at least four measuring tubes running parallel, wherein the measuring tubes are joined in pairs into a oscillation unit by at least one holding device (1), wherein the measuring tubes are inserted in recesses (2) in the holding device (1), wherein at least one part of either a sensor or actuator device is attached to the holding device (1), wherein the meas-uring tube central axis (3) of a measuring tube pair spans one common plane (E), and wherein the holding device (1) has at least two attachment extensions (4),
**characterized in**
**that** the attachment extensions (4) extend into the plane (E) and that the holding devices (1) are designed in mirror symmetry to the plane (E) with the attachment extensions (4) in respect to their projection view in the direction of the measuring tube central axis (3).

2. Coriolis mass flowmeter according to claim 1, **characterized in that** the holding device (1) is formed integrally with the attachment extensions (4), in particular of one single raw part.

3. Coriolis mass flowmeter according to claim 1 or 2, **characterized in that** the extension of the holding devices (1) in the direction of the measuring tube central axes (3) is greater than twice the measuring tube wall thickness and less than the measuring tube diameter.

4. Coriolis mass flowmeter according to any one of claims 1 to 3, **characterized in that** the extension of the holding device (1) in the direction of the measuring tube central axis (3) is equal to about half the measuring tube diameter.

5. Coriolis mass flowmeter according to any one of claims 1 to 4, **characterized in that** the side flanks (5) of the holding device (1) extend between the measuring tube central axes (3) parallel to the plane (E), in particular, the side flanks (5) run parallel to one another.

6. Coriolis mass flowmeter according to any one of claims 1 to 5, **characterized in that** the attachment extensions (4) of the holding devices (1) have a square projection view in the direction of the measuring tube central axes (3).

7. Coriolis mass flowmeter according to any one of claims 1 to 6, **characterized in that** the holding devices (1) have a hole (8) between the recesses (2) for the measuring tube each right and left of the plane (E), wherein the holes (8) extend parallel to the recesses (2).

8. Coriolis mass flowmeter according to any one of claims 1 to 7, **characterized in that** the minimum wall thickness of the holding device (1) in the area (9) of the recesses (2) for the measuring tube, i.e. radial to the measuring tube central axes (3) corresponds to about 10% of the measuring tube diameter.

9. Coriolis mass flowmeter according to any one of claims 1 to 8, **characterized in that** the holding devices (1) with the attachment extensions (4) in their basic form are also designed with a mirror symmetry in respect to a plane (B), wherein the plane (B) extends orthogonally to plane (E) and lies in the middle between the measuring tube central axes (3) of a measuring tube pair.

10. Coriolis mass flowmeter according to any one of claims 1 to 9, **characterized in that** the holding device (1) with the attachment extensions (4) is made of a stainless steel.

11. Coriolis mass flowmeter according to any one of claims 1 to 10, **characterized in that** two node plates are provided on both sides in the end sections of the measuring tube, that the node plates are designed symmetrically and that the thickness of the node plates corresponds to the extension of the holding device (1) in the direction of the measuring tube central axes (3).

## Revendications

1. Débitmètre massique à effet Coriolis comprenant au moins quatre tubes de mesure s'étendant parallèlement, les tubes de mesure étant réunis à chaque fois par paires avec au moins un dispositif de retenue (1) pour former une unité oscillante, les tubes de mesure étant introduits dans des évidements (2) dans les dispositifs de retenue (1), à chaque fois au moins une partie d'un dispositif de capteur ou d'actionneur étant fixée aux dispositifs de retenue (1), les axes médians (3) de tubes de mesure d'une paire de tubes de mesure formant un plan commun (E) et les dispositifs de retenue (1) présentant au moins deux pièces de fixation (4),
**caractérisé en ce que**
les pièces de fixation (4) s'étendent dans le plan (E) et **en ce que** les dispositifs de retenue (1) sont configurés avec les pièces de fixation (4) avec une symétrie spéculaire par rapport au plan (E) par rapport à leur vue en projection dans la direction des axes médians (3) de tubes de mesure.

2. Débitmètre massique à effet Coriolis selon la revendication 1, **caractérisé en ce que** les dispositifs de retenue (1) sont réalisés d'une seule pièce avec les pièces de fixation (4), notamment sont fabriqués à partir d'une pièce tubulaire unique.

3. Débitmètre massique à effet Coriolis selon la revendication 1 ou 2, **caractérisé en ce que** l'étendue des dispositifs de retenue (1) dans la direction des axes médians (3) de tubes de mesure est supérieure au double de l'épaisseur de paroi des tubes de mesure et est inférieure au diamètre des tubes de mesure.

4. Débitmètre massique à effet Coriolis selon l'une quelconque des revendications 1 à 3, **caractérisé en ce que** l'étendue des dispositifs de retenue (1) dans la direction des axes médians (3) de tubes de mesure correspond à approximativement la moitié du diamètre des tubes de mesure.

5. Débitmètre massique à effet Coriolis selon l'une quelconque des revendications 1 à 4, **caractérisé en ce que** les flancs latéraux (5) des dispositifs de retenue (1) s'étendent entre les axes médians (3) de tubes de mesure parallèlement au plan (E), notamment les flancs latéraux (5) s'étendent parallèlement les uns aux autres.

6. Débitmètre massique à effet Coriolis selon l'une quelconque des revendications 1 à 5, **caractérisé en ce que** les pièces de fixation (4) des dispositifs de retenue (1) présentent dans la direction des axes médians (3) de tubes de mesure une vue en projection rectangulaire.

7. Débitmètre massique à effet Coriolis selon l'une quelconque des revendications 1 à 6, **caractérisé en ce que** les dispositifs de retenue (1) présentent entre les évidements (2) pour les tubes de mesure à chaque fois à droite et à gauche du plan (E) un alésage (8), les alésages (8) s'étendant parallèlement aux évidements (2).

8. Débitmètre massique à effet Coriolis selon l'une quelconque des revendications 1 à 7, **caractérisé en ce que** l'épaisseur de paroi minimale des dispositifs de retenue (1) dans la région (9) des évidements (2) pour les tubes de mesure, c'est-à-dire radialement par rapport à l'axe médian (3) de tubes de mesure, correspond approximativement à 10 % du diamètre des tubes de mesure.

9. Débitmètre massique à effet Coriolis selon l'une quelconque des revendications 1 à 8, **caractérisé en ce que** les dispositifs de retenue (1) avec les pièces de fixation (4) dans leur forme de base sont configurés avec une symétrie spéculaire également par rapport à un plan (B), le plan (B) s'étendant perpendiculairement au plan (E) et se trouvant au centre entre les axes médians (3) de tubes de mesure d'une paire de tubes de mesure.

10. Débitmètre massique à effet Coriolis selon l'une quelconque des revendications 1 à 9, **caractérisé en ce que** les dispositifs de retenue (1) sont fabriqués avec les pièces de fixation (4) à partir d'un acier inoxydable.

11. Débitmètre massique à effet Coriolis selon l'une quelconque des revendications 1 à 10, **caractérisé en ce que** des deux côtés dans les régions d'extrémité des tubes de mesure sont à chaque fois prévues deux plaques moletées, **en ce que** les plaques moletées sont configurées sous forme symétrique, et **en ce que** l'épaisseur des plaques moletées correspond à l'étendue des dispositifs de retenue (1) dans la direction des axes médians (3) de tubes de mesure.
